# EUROPEAN PATENT APPLICATION

(11) **EP 0 824 864 A1**
(43) Date of publication of application: **25.02.1998**
(21) Application number: 97900213.6
(22) Date of filing: 07.01.1997
(51) Int. Cl.: A21C 5/02

(54) **PROCESS FOR OBTAIN THE WEIGHT OF A DOUGH PORTION AND CORRESPONDING MACHINE**

(30) Priority: 15.01.1996 ES 9600080
(71) Applicant: Industrias Torrents, S.A., 08211 Castellar del Valles (ES)
(72) Inventor: LOPEZ CASTILLO, Indalecio, E-08211 Castellar del Valles (ES); TORRENTS RIUS, Jaime, E-08211 Castellar del Valles (ES); TORRENTS RIUS, Carles, E-08211 Castellar del Valles (ES)
(74) Representative: Manresa Val, Manuel
(86) International application number: ES9700003
(87) International publication number: WO9725868

(57) **Abstract**

The process comprises initially matching a cylinder (8) with the outlet of a dough storage hopper (1), filing by absorption said cylinder by lowering of the piston (12) of said cylinder, rocking the cylinder (8) sideways, to effect an initial pressing and homogenization of the dough and rocking again the cylinder (8) under the hopper (1) and returning, by upward displacement of the piston (12), part of the dough to the hopper, said portion of dough corresponding to the difference between initially absorbed and the preset amount of dough according to the equivalence between the displacements of the piston (12) itself and the number of impulses generated by an impulse generator, in operational combination with a pressure switch. Once the desired resulting dough is obtained, the cylinder (1) is rocked towards the opposite side, and the resulting portion of dough is expulsed and collected on a conveyor belt (33).

## Description

### OBJECT OF THE INVENTION

This invention, as disclosed in this specification, refers to a process which allows to obtain, with high accuracy, the weigh of a portion of dough for making bread designed, after its corresponding handling and making, to form a loaf of bread for consumption.

Another object of the invention is also the machine to achieve said portion of resulting dough with its pre-established weigh.

The weigh is obtained through an electronic calculation in which are borne in mind: an undetermined amount of dough absorbed by a cylinder; the preselected or pre-established amount of dough as that corresponding to the weigh to be obtained; as well as cylinder piston travels to achieve the absorbed dough homogenization and to obtain the dough in excess feedback which will correspond to the difference between the absorbed and the pre-established amount, all of it according to the equivalences between the piston travels and corresponding pulses provided by a pulse generator in functional combination with a pressure switch which checks the piston position, when said piston reaches, in its travel, a point at which pressure on the dough corresponds to that of homogenization, and to which travel will correspond a number of pulses recorded by a pulse counter. Operation steps are performed by a machine by means of which the dough absorption cylinder sequentially sustains a tilting movement towards one and the other side with respect to the outlet of a dough storing hopper, the tilts of which in combination with the axial travels sustained by piston within the cylinder and with the pressing action of said piston on the dough itself, will provide an amount of resulting dough the weigh of which will correspond to the one sought or pre-established, the resulting dough portion being directly expelled outward the cylinder and collected by a conveyor band which may be associated to a dough mixer, to a rest machine or other handling and/or processing means of the portions of dough for making bread from which related loafs of bread will result.

A main object of the invention is to achieve a high weighing accuracy, as well as to prevent resulting dough portion friction at expelling step thereof, all of it on the grounds of electronically driven and controlled and particularly devised means, in which calculation or measurement is performed by comparison between a pulses determined maximum equivalent to cylinder full filling and the number of pulses equivalent to pre-established weigh, so that this pulses difference is duly recorded to deliver due orders to the piston and that this later carries out the feedback of dough in excess which will correspond to the difference between the absorbed dough or of initial cylinder filling and the dough considered as resulting portion having pre-established weigh, this difference corresponding, as above stated, to the comparison between the number of pulses provided by a pulse generator and the number of pulses recorded in a counter, according to piston travels and pressure switch performance which allows to check the amount of dough in the cylinder.

### BACKGROUNDS OF THE INVENTION

Presently used weighing machines in bread industry, designed to weigh a dough portion from which a loaf of bread will be obtained, use as means to achieve sought amount, a cylinder which is arranged under a dough containing hopper, said cylinder includes an axially movable piston within said cylinder, this later being alternatively rotatory between a position facing the hopper outlet and a side position corresponding to dough expulsion, in the first case the dough incoming in the cylinder and in the second case dough pressing within the cylinder and simultaneously said dough expulsion being achieved. This process provokes a forced flattening which significantly damage the dough.

In addition, means to achieve pre-established weigh of each dough portion are mechanical and hand driven at user's convenience, taking as basis analogous scales or references, and there exists no possibility that the machine itself calculates sought dough weigh.

Among the drawbacks conventional weighing machines have, those below can be mentioned as the most outstanding ones:
- Little weighing accuracy, because weighing selection and operating rate selection are mechanically performed, and there exists no means which allows to accurately calculate the weigh.
- Dough friction at its expelling step, and therefore a loss of quality thereof.
- The expelling exit is performed in such a way that part of the dough is fed back to the hopper and another part, which will constitute sought portion, is outwardly expelled. This means that, the exit is not fully open, a sector existing between expulsion exit itself and hopper feeding back area, dough friction occurs at said sector as a consequence of the pressure sustained by the dough during the pulse of the piston provided in related cylinder to achieve the expulsion itself.
- Lubricants are required at some weighing machine parts and/or components, to prevent dough adherence and to achieve correct and effective operation of the weighing machine itself.

### DESCRIPTION OF THE INVENTION

The process of the invention and related machine, have the purpose to prevent all above problems and to achieve a portion of dough for making bread having a very accurate weigh and without sustaining a friction when it is expelled.

In this sense, the process of the invention is on the grounds of performing four main operation steps, which are as follows:

Absorption of the dough for fully filling the cylinder; compression of said initial dough to homogenize it within the closed cylinder and to calculate the amount of dough which has to be fed back until obtaining sought dough portion; feedback/return of said dough in excess to the storing hopper itself, and last, as fourth step, to expel the resulting dough portion which will exit with pre-established weigh.

These four operation steps on which the invention process is based, carry a series of complementary operation sequences, such as the movements to be performed as well by the cylinder as by the piston, in the first case with tilting or angular movement and in the second case with axial movement, as well as the electronically performed calculations to determine every time, with a pressure switch cooperation, the amount of dough, according to the piston travel and position, each position corresponding to a number of pulses provided by a pulse generator, said pulses being duly recorded in order to calculate the dough in excess which has to be fed back to the hopper and to obtain so the dough corresponding to pre-established weigh, bearing in mind that the difference between the number of total pulses which will correspond to the piston maximum travel for filling the cylinder and the sum of the number of pulses which are recorded at dough pressing step to achieve its homogenization, plus the number of pre-established number of pulses as corresponding to resulting dough with pre-established weigh, will provide as result the number of pulses necessary to feed back the dough in excess, because there exist an equivalence between the number of pulses and the piston travel.

As for the operation steps properly so-called, to obtain the sought or pre-established weigh, at first step the cylinder collecting the dough is located facing the lower outlet of related dough storing hopper, cylinder filling being vacuum produced. Thereafter, said cylinder tilt sideways occurs, in which position contained dough pressing is performed, to achieve the homogenization thereof. Said pressing is performed by cylinder piston travel, pressure being determined by a pressure switch which acts combined with said pulse generator, the pulses being duly recorded. Thereafter, the cylinder is newly tilted toward the position facing the hopper lower outlet, dough in excess feedback being performed, as a result of pulses number comparative analysis, according to above stated, to finally perform cylinder tilt toward the opposite side, dough portion with sought weigh expulsion being performed.

As for structural characteristics of the machine itself, its includes already mentioned cylinder with its piston, the former being located facing the dough for making bread storing hopper lower outlet, the cylinder being formed by a sleeve tightly housed within a cylindric body the higher part of which includes an arcuate sector projecting according to two opposite parts, fitting this sector under the concave surface of a roofing tile-shaped body provided with a hole in which the hopper lower end is socketed and mounted.

On the higher mouthpiece of the sleeve forming the cylinder a cap is integral associated to springs which keep the unit floating, which makes the cap is constantly fitted on the body concave surface acting as a roofing tile.

Mentioned cylinder, and more specifically the unit formed by the sleeve, the tubular casing body with its arcuate sector, floating cap and related piston, is tiltably mounted toward two opposite sides, allowing above referred process steps or operations are performed, i.e., facing the cylinder to the hopper outlet for filling the cylinder; tilt of said cylinder sideways to perform a first dough pressing; tilt back to the original position to feed back the dough in excess and tilt toward the opposite side to perform dough expulsion which will constitute the sought portion and from which a loaf of bread will be finally obtained.

Tilting movements of the unit of which the cylinder is a part will match piston axial movements, all of it in order to correctly perform functions corresponding to the different operation steps.

Every movement will be electronically driven with due sequence, in accordance with the signals provided at each movement and in each machine operation moment.

As for the cylinder piston, it is hinged to a piston rod which by its opposite end hinges an arm or handle driven in rotation by a motor-reducer, said arm or handle having an oblong hole in which the own piston rod hinge pin acts, said piston rod being formed by two parts joined to each other by means of an intermediate axial stem, which has an end threaded length for fastening to the part of the piston rod which hinges the arm or handle, while the other end length of said stem remains housed in an axial and blind hole provided for said purpose on the other piston rod part, with the peculiarity that between said stem length end and the hole bottom of the piston rod part in which it remains housed, a spring with due scaling is provided, which together with the stem itself determines a pressure switch on which grounds and in accordance with the piston position due orders to perform cylinder unit tilt movement will be issued.

Said pressure switch is also associated to a small lever in which a detector for delivering signals to respective driving motor may impinge, a small lever which will open the circuit in a tilting movement of the stem itself to which it is associated, with the consequence that the stem is mounted with an axial clearance which makes possible during cylinder unit tilting movements and of course during piston axial travel, minimum tilt of said stem to take apart the small lever from the detector.

On the other hand, the piston bears bevels at its edge supported on the sleeve, to allow the evacuation of dough which normally has access to the interior during the machine operation and if said bevels did not exist, as overflows, the dough would remain located between the piston side surface and the sleeve side surface, which would give rise to possible failures and to malfunctioning.

The machine is completed with a conveyor band arranged at a side area, a band provided to collect and carry dough portions which are being weighed and expelled from the cylinder, said band being mounted between rollers, one of which acts as tightener allowing to bring closer and/or take apart one end of said band with respect to the area where dough portions expulsion is performed, to collect them and pull or carry them toward an exit area where they are released on other means for handling or processing the dough portions themselves in order to definitively obtain the loaves of bread.

Subsequently to machine structural characteristics, a series of advantages are achieved with respect to those presently existing, among said advantages we can mention weigh calculation accuracy, as well as lack of dough friction, because the exit of dough portions at their expulsion is fully open and therefore no friction at all will exist. Lubricants are not required either.

At last, to say that the machine is designed so that, in the event of receiving an amount lower than the sought resulting dough portion, it acts and expels the whole dough within the hopper, to repeat the cycle since the beginning.

It must also be pointed out that the arcuate part contacting the concave surface of the roofing tile-shaped part, is floatingly mounted due to springs which will keep this part with a slight, always constant pressure on referred concave surface, providing for said purpose mounting a mushroom or cap-shaped part arranged on the top of cylindric body where arcuate sector is shaped, by embedding springs which provide the floating nature. Obviously, this mushroom or cap-shaped part has a hole provided in it the diameter of which will correspond to that of the sleeve, this later being fixed to said part to jointly form the cylinder itself. Referred floating mounting guarantees the tightness, as curved surfaces are constantly in contact, and there is no need to use lubricants or other fluids, therefore the machine is free of servicing.

It must also be pointed out that this mushroom or cap-shaped part can be provided with openings through which small amounts of dough can be evacuated which are introduced through the fittings and small clearances between the different parts.

### SHORT DESCRIPTION OF THE DRAWINGS

To complete the description below and in order to assist for a best understanding of the characteristics of the invention, a set of drawings is attached to this specification, on the grounds of the former it will be easier to understand the innovations and advantages of the machine developed according to the object of the invention.

Fig. 1 shows a schematic side view of the weighing machine itself, with part thereof sectioned to allow to see the constitution and arrangement of certain components.

Fig. 2 shows an enlarged view of the piston driving piston rod provided within the cylinder collecting the dough.

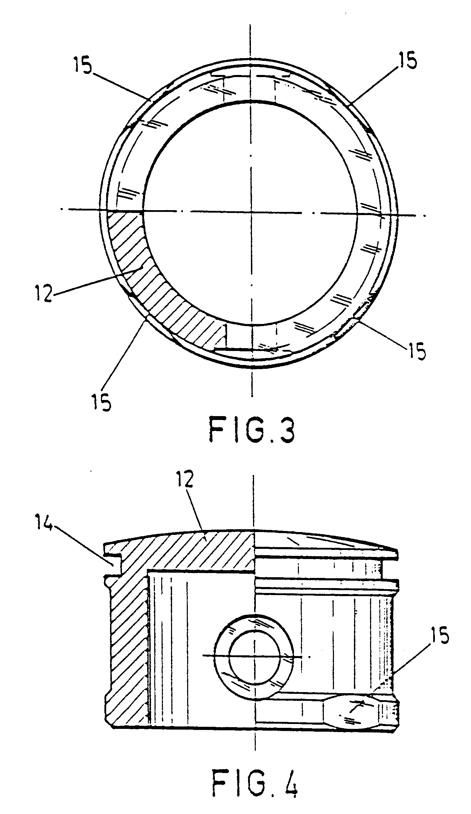

Fig. 3 shows a plan view of the piston itself with a 1/4 section.

Fig. 4 shows a piston side view represented in preceding figure, with same sectioning.

Fig. 5, 6, 7 and 8 show as many other schematic views corresponding to the four operation steps of the weighing machine.

### DESCRIPTION OF THE PREFERRED EMBODIMENT

Looking at above figures, it can be noted that the machine by means of which the effect of the invention is applied, and according to a preferred embodiment, includes a hopper 1 for storing the dough for making bread, with its related lower outlet 2 mounted on a part 3 which will be thereafter called roofing tile, being locked by means of an embedded flange 4. The roofing tile 3 has a curved-concave lower surface 5 and is complementary to the higher surface corresponding to sector 6, having logically a curved-convex higher surface, sector 6 which is extended at the lower part in a tubular body 7 having a cylindric shape in the interior of which is located a sleeve 8 which constitute the dough for making bread collecting cylinder as disclosed below. Sector 6 includes related hole in order that sleeve or cylinder 8 can collect the dough.

Sleeve 8 is fastened at the top, by a threaded or any other conventional system, to a cap-shaped part 9 which possesses the hole the diameter of which will correspond to that of the sleeve itself 8, this part or cap 9 being floatingly mounted on sector 6, because between this sector 6 and the part 9 itself, swivels 10 are arranged with surrounded springs 11, in such a way that swivels 10 are the ones which perform the anchorage of the cap-shaped part 9 on sector 6, and springs 11 are those which provide said part 9 and therefore sleeve 8 constituting the cylinder with floating nature, all of it so that because of those springs 11 the also curved-convex surface of cap-shaped part 9 is continuously supported with sufficient strength on curved-concave surface 5 of roofing tile 3, performing thus a fitting between parts which prevent the dough passing through and that the use of lubricant is required as it happens with other conventional machines.

Within sleeve 8 or cylinder it constitutes, a piston 12 is provided the top surface of which is curved-convex, determining a continuation of cap 9 surface, therefore this higher surface of piston 12 will also fit, in the event of tilt as disclosed below, with concave surface 5 of roofing tile 3.

Piston 12 fits on sleeve 8 through a higher joint 13 located in an annular slot 14 provided for said purpose in said piston 12, said slot being provided at its lower part, and in correspondence with its side surface, with facetings 15 in order that the dough which could be filtered between piston 12 and the sleeve 8 itself may pass through them, in the event said facetings 15 should not exist said dough would be retained at the annular area 12' and comprised, as stated above, between piston 12 side surface and sleeve 8 surface itself, in such a way that in said piston 12 axial movements and thanks to said facetings 15 the dough which could pass would be evacuated downwards through said facetings 15.

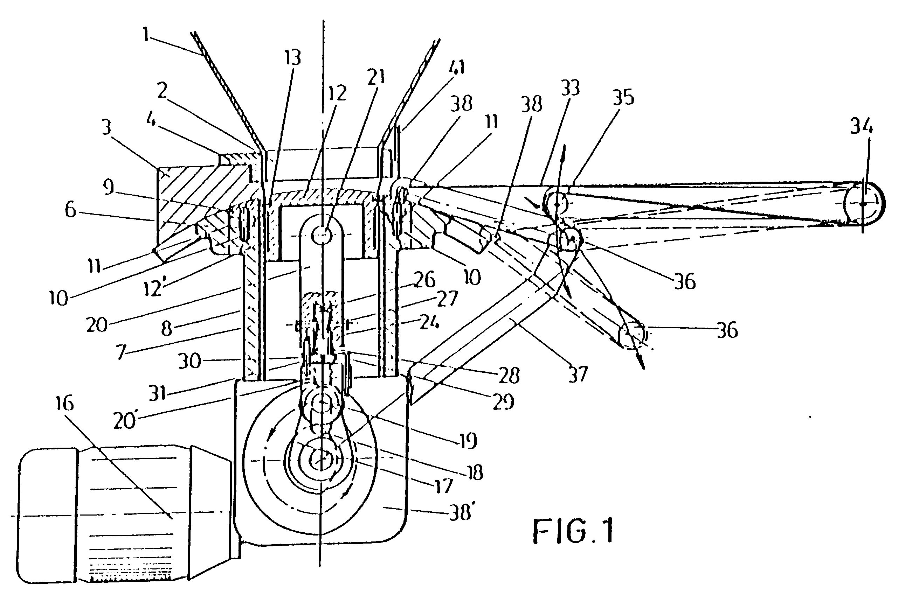

The cylinder as a whole, i.e. the one determined by sleeve 8, cylinder body 7 in which said sleeve 8 is housed, and sector 6 to which said cylinder body 7 pertains, as well as cap 9 itself, including in addition related piston 12, is a unit tilting toward one and the other side, it may rotate towards the left, according to figure 1, an about 23° angle, while toward the right it will rotate an about 27° angle, all of it as it will be stated below and according to functions to be performed at said tilting positions.

On its side, piston 12 is axially movable upwards and downwards and drivable from a motor 16 which drives a handle 17 provided with an oblong hole or window 18 in which an hinging bolt 19 acts for an hinged piston rod 20, at its other end and through bolt 21, to piston 12, therefore the movements oh this later are performed by means of related piston rod linked to lever 17 which is driven from motor 16.

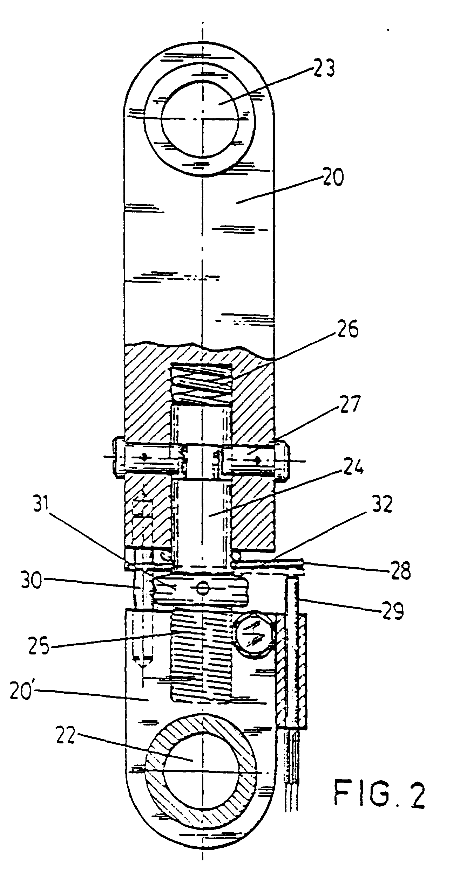

At Fig. 2, one can observe piston rod 20 itself with the holes 22 and 23 where hinging bolts 19 and 21 of said piston rod 20 ends remain accurately mounted with respect to lever 17 and piston 12, as above stated.

Said piston rod 20 is formed by two parts linked to each other, a higher corresponding to reference 20 itself and a lower corresponding to reference 20', so that both parts are joined by means of a stem 24 which by one end has a threaded length 25 through which locking on lower part 20' of piston rod 20 is performed, while higher length of said stem 24, as shown at Fig. 2, remains housed in corresponding hole provided for said purpose at said piston rod 20 higher part, in such a way that between the end of this hole and the end of stem 24 a spring 26 has been placed which together with said stem 24 is going to constitute a pressure switch as stated below.

Bolt 24 remains retained by cross pins 27, able to axially move a minimum distance, for example one millimeter, with the function disclosed below, because said mounting clearance will allow that a small lever 28 facing a detector 29 is tilted, said small lever 28 being linked to stem 24 itself and to a swivel 30 which acts as centring element between the two parts 20 and 20' of the piston rod. Between said two parts 20 and 20' of the piston rod a thickened part 31 or having a larger outline of the stem 32 itself remains embedded, with high surface provided with a faceting 32 which makes possible above stated tilting.

The machine so constituted is completed with a conveyor band 33 laterally mounted between a driving roller 34, a tightening roller 35, a roller 36 mounted at the end of a radial lever 37 fixed to the block itself 38' integral with the cylinder unit, and a roller 38 located opposite to roller 34, all of it as shown in Fig. 1, the conveyor band 33, thanks to tiltings sustained by lever 37, synchronized with tilting movements toward one and the other side of the cylinder unit, will go closer to related machine side exit, as shown at Fig. 1 itself, to collect dough for making bread or to be arranged or withdrawn as represented by a dotted line. Roller 36 provides conveyor band 33 with a wedge shape and in correspondence with the passing end through roller 38, in order to make its positioning above sector 6 of this side possible and be able to collect dough for making bread.

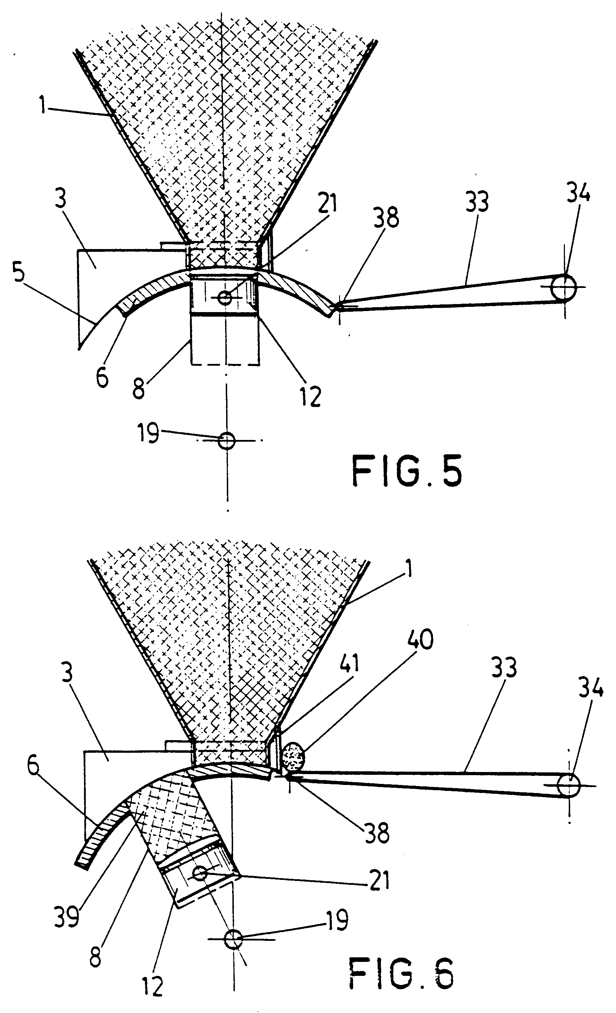

According to above disclosed characteristics, machine operation schematically shown in Fig. 5, 6, 7 and 8, is as follows:

It is started from the fact that the machine involved has a pulse generator having a counter for said pulses, and that the number of pulses is ratable or equivalent to the run or travel of the cylinder piston and therefore with the amount of dough or weigh thereof, and that a number of pulses considered as maximum corresponds to the piston movement for filling the cylinder, the number of pulses corresponding to pre-established weigh sought to obtain is known.

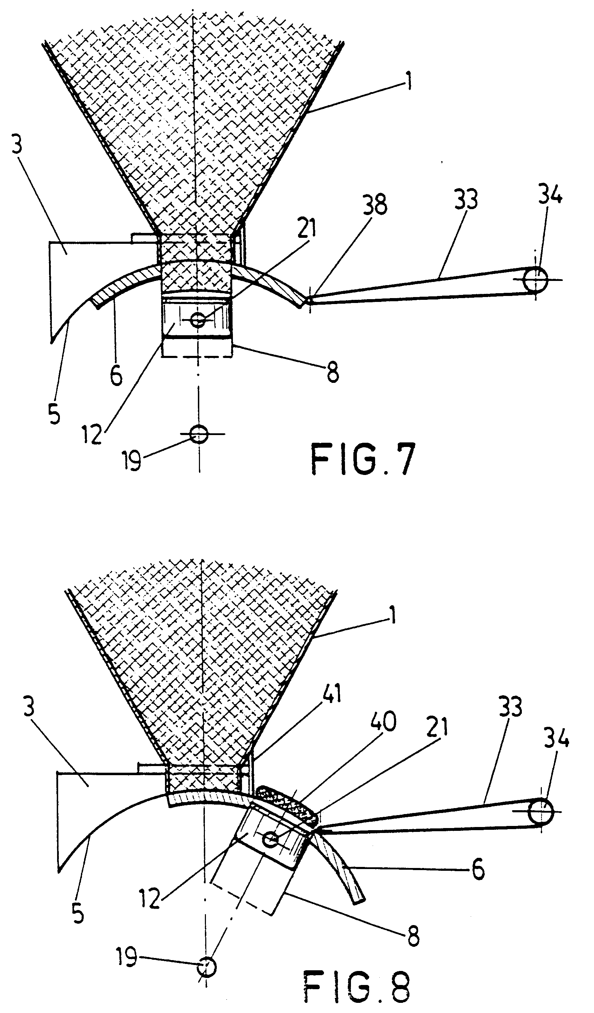

Bearing in mind above and starting from the position shown at Fig. 5, cylinder or sleeve 8 constituting it remains perfectly facing hopper 1 outlet 2, so that in this position and with prior piston 12 going down, cylinder 8 filling with corresponding dough will occur, subsequently to the fact that piston 12 going down originates a vacuum in the cylinder 8 itself, producing so the suction or absorption of the dough which will fill said cylinder or sleeve 8. In this position, a detector delivers corresponding signal to operate a motor which tilts the cylinder unit, a tilting which is achieved towards the left and which will correspond to Fig. 6, so that said tilting limit will make that corresponding end of stroke delivers the signal in order motor 16 acts on piston rod 20, producing upward movement of the piston 12 itself, originating a slight pressure on dough 39 filling cylinder 8, pressing being performed by piston 12 until the pressure switch forming spring 26 and stem 24 indicates it so, which will be performed in the moment when the small lever 28 is taken apart from detector 29, the signal being newly delivered in order the driving motor of the cylinder unit acts and this later is repositioned facing under hopper 1, corresponding to the position in Fig. 5.

Dough 39 pressing within cylinder 8, corresponding to Fig. 6, is carried out as a consequence of higher end of said cylinder 8 remaining located on concave surface 5 of roofing tile 3, while sector 6 corresponding to the right part, in this position of figure 6, closes lower and outlet 2 of the hopper 1 itself, preventing the dough falls.

At pressing step to achieve dough 39 homogenization within cylinder 8, at tilting position toward the left thereof, in the moment when piston 12 movement is started to achieve pressing, pulse counter starts operating and records, from zero, the number of pulses corresponding to the movement said piston 12 makes until achieving dough 39 homogenization, moment when pressure switch delivers the order to have the counter stopped and cylinder 8 tilting towards the right until it reaches a position facing hopper 1, as represented in Fig. 7, then motor 16 receives corresponding signal and acts on piston 12, this later pushing dough 39 towards hopper 1, feeding back part of this dough 39 until achieving the amount or portion of dough having pre-established weigh, said dough being outwardly expelled as a consequence that thereafter cylinder unit driving motor will be activated is activated, in order the cylinder unit tilts towards opposite side, i.e. towards the right where conveyor band 33 is previously arranged in the position shown in Fig. 1, taking dough 40 portion corresponding to pre-established weigh and pulling it outward while the machine is making a following weighing in synchronization, cycle being indefinitely repeated in order to obtain dough 40 portions having a very accurate pre-established weigh.

The dough portion 40 obtained with pre-established weigh, is expelled as shown in Fig. 8, in whose position the conveyor band 33 is taken apart, in order that in cylinder 8 tilting sense run toward the left, said cylinder is newly facing hopper 1, band 33 makes due movements and carries said dough remaining portion 40 collection, as shown in Fig. 6, pressed against a nonadherent wall 41 provided on the side, wall 41 pertaining to the part or roofing tile 3 itself above referred.

In the expulsion step of the dough in excess, in the moment when piston 12 movement starts upwardly to achieve said dough feeding back, pulse counter is newly started until it records a number of pulses which will correspond to the difference between the maximum number of pulses corresponding to those of cylinder fully filling and the number of pulses resulting from adding pulses recorded at the homogenization step and pre-established pulses for the weigh to be obtained, so that this difference will correspond to the movement piston 12 must perform to expel the dough in excess.

## Claims

1. Process to obtain the weigh of a portion of dough for making bread characterized in that it comprises following operation steps:
- facing an open end of a cylinder to the outlet of a dough for making bread storage hopper, said cylinder including an axially movable piston;
- vacuum filling said cylinder, with an undetermined amount of dough, by moving said piston far away from said outlet;
- pressing said undetermined amount of dough, against a fixed surface, with prior cylinder sideways transfer, until the pressure on the dough corresponds to a value which allows to achieve the dough itself homogenization, controlling cylinder internal pressure by means of a pressure switch;
- newly transfer the cylinder until it faces again the hopper outlet;
- move related cylinder piston closer to said hopper outlet, to feedback an amount of dough in excess to the hopper;
- supply through a pulse generator pulses which keep a linearity with cylinder piston run or travel, and therefore with the amount of dough or weigh thereof, and to electronically record said pulses:
- at the homogenization step, obtaining thus through electronic calculation the amount of dough absorbed, at a predetermined pressure controlled by said pressure switch;
- at the step of dough in excess feedback, by the piston travel equivalent to a certain number of pulses;
- achieve a comparison between the number of pulses corresponding to one piston travel at cylinder filling step, considered as maximum, with the pulses counted at the homogenization step, to obtain, from their difference, the pulses required for said dough in excess feedback step, so that an amount of material equivalent to the pre-established weigh remains in the cylinder;
- displace the cylinder with the remaining dough portion toward an exit area, and
- move the piston outwardly pushing and expelling said remaining dough portion, the weigh of which will be the pre-established or sought;

2. Machine to weigh dough for making bread, designed to achieve a portion of dough resulting with a pre-established weigh, starting from a larger amount of dough than that of said resulting portion, comprising a cylinder receiving the dough, open at one end, mounted with the capability to move sideways and which includes at its interior an axially movable piston, being additionally complemented by a conveyor band for collecting and transferring each resulting dough portion up to an exit point for further handling of said resulting portion of dough from which a loaf of bread is obtained for consumption, characterized in that piston (12) of cylinder (8) receiving the dough is hinged to a piston rod formed by two parts (20 and 20'), axially facing each other and joined to each other by a stem (24) associated to a spring (26) to jointly determine a pressure switch which, in functional combination with a generator and a pulse counter which keep linearity with piston travels provide data on the piston (12) itself position and so, by an electronic calculation, of the amount of dough the cylinder itself contains; it has been foreseen that the piston rod (20) driving piston (12), as well as cylinder (8) itself, are hinged to related levers which may be driven by a motor, according to orders received at the different movement steps, in which cylinder (8), is transferred from a loading initial position to a side in which piston (12) performs dough (39) pressing against a fixed plane, being the cylinder driven thereafter to pass to its initial position facing dough storing hopper (1) facing outlet (2), in which piston (12) is inwardly displaced to feedback dough in excess to the hopper (1) itself, with prior comparison in said position of the initial filling dough and from which it is sought to obtain as resulting dough portion (40), with a pre-established weigh, then cylinder (8) is newly driven, to have the piston (12) transferring toward the other side and expelling resulting dough portion (40); with the peculiarity that feeding back dough in excess to the hopper (1) and expelling resulting dough (40) is freely achieved, without friction through the open end of the cylinder facing outlet (2) or outwardly and directly flowing, respectively.

3. Machine, according to claim 2, characterized in that cylinder (8) collecting dough coming from storage hopper (1) is constituted by a sleeve (8) housed within a cylinder body (7) which at its open end forms an arcuate sector (6) the surface of which is complementary to the concave surface (5) pertaining to a fixed part (3), as a roofing tile on which the hopper (1) itself is mounted with the interposition of a flange (4), having being foreseen that at the top of the cylindric body (7) itself in which cylinder sleeve (8) is located, a hood-shaped part (9) is mounted, at the respective recess of sector (6), the sleeve (8) itself being fixed on said hood, both having same passing width, and said hood-shaped part (9) remains floatingly mounted by means of springs (11) which are mounted on related positioning and mounting swivels (10) of the hood-shaped part (9) itself on sector (6) or top of cylinder body (7).

4. Machine, according to claims 2 and 3, characterized in that the top of hood-shaped part (9) is arcuate and complementary to the curved-concave surface (5) of roofing tile-shaped part (3), in such a way that by means of springs (11) determining floating assembly means, a continuous pushing of said hood-shaped part (9) is provided against roofing tile (3) concave surface (5), preventing by means of said floating adjustment dough passing through coupling areas.

5. Machine, according to claims 2, 3 and 4, characterized in that piston (12) gets on sleeve (8) with interposition of a leakproof joint (13) housed in a notch or annular slot (14) provided for said purpose at the piston (12) top, and at said piston (12) bottom it integrates facetings (15) which determine means to allow evacuation of dough which could pass between the piston (12) itself and sleeve (8) through joint (13).

6. Machine, according to claims 2 to 5, characterized in that stem (24) linking the two parts (20, 20') determining the piston rod on which the piston (12) itself is hinged, includes a lower and threaded length (25) by means of which the bottom (20') of said piston rod is locked, while the top length of said stem (24) remains housed in a blind hole axial to piston rod top part (20), between said stem (24) and the blind hole bottom spring (26) is embedded to form a pressure switch between both elements, said stem (24) remaining locked by means of bolts (27) with a small clearance in axial sense which allows that the stem (24) moves and that an associated small lever (28) tilts, facing a detector (29), all of it in order to provide related signals to perform the transfers of the cylinder unit, and that piston (12) carries out pressing on the dough until obtaining dough portion (40) with pre-established weigh.

7. Machine, according to claims 2 to 6, characterized in that piston rod (20) bottom (20') which hinges piston (12) is linked, through an hinging bolt (19), to a lever or handle (17) which may be driven through related motor (16), lever (17) which is provided with an extended hole (18) in which the bolt or hinging shaft (19) itself of said piston rod (20) bottom (20') is located.

8. Machine, according to claims 2 to 7, characterized in that it includes at one of its sides a related conveyor band (33) for collecting and carrying portions of dough to make bread (40) which are obtained, said conveying band (33) is mounted between a driving roller (34), a tightener roller (35), a roller (36) mounted on a radial lever (37) locked at the block (38') forming part of cylinder unit, and a last roller (38) which corresponds to the facing end of the conveying band (33) at the exit where resulting dough (40) is expelled, forming at that end part where the roller (38) is mounted, a wedge shape of the conveying band (33) itself to make its incoming toward the exit area possible, above a surface forming arcuate sector (6) and the cylinder unit itself, it has been foreseen that this conveying band (33) wedge-shaped end is inwardly and backwardly movable by means of the transfer movements which the radial lever (37) itself sustains, because it is integral with block (38') forming part of cylinder unit which is transferable by means of a motor.
